# EUROPÄISCHE PATENTSCHRIFT

(11) **EP 0 706 934 B1**
(45) Veröffentlichungstag und Bekanntmachung des Hinweises auf die Patenterteilung: **22.09.1999**
(21) Anmeldenummer: 95890182.9
(22) Anmeldetag: 11.10.1995
(51) Int. Cl.: B62M 1/18

(54) **Muskelkraftbetriebenes Sportgerät**
Muscle-powered sports apparatus
Appareil de sport mû par la force musculaire

(30) Priorität: 12.10.1994 AT 192594; 04.10.1995 AT 164695
(43) Veröffentlichungstag der Anmeldung: 17.04.1996
(73) Patentinhaber: Maresch, Herbert, sen., 2231 Strasshof (AT)
(72) Erfinder: Maresch, Herbert, sen., 2231 Strasshof (AT)
(74) Vertreter: Israiloff, Peter, Dr. Dipl.-Ing.

(56) Entgegenhaltungen:
- EP-A- 0 000 228
- WO-A-91/08943
- DE-C- 88 425
- DE-C- 106 109
- FR-A- 1 187 269
- FR-A- 2 689 086
- GB-A- 1 413 844
- GB-A- 2 171 655
- NL-A- 8 200 455
- US-A- 3 979 135
- US-A- 4 886 287

## Beschreibung

Die Erfindung bezieht sich auf ein muskelkraftbetriebenes Sportgerät, insbesondere Fahrzeug, mit einem Basiskörper, an dem ein in dessen Längsrichtung hin und her bewegbar gelagerter Sitz, Handgriffe, Fußstützen und ein Zugmittelgetriebe mit wenigstens einem mittelbar oder unmittelbar mit dem Sitz verbundenen Zugmittel angebracht sind, welches Zugmittelgetriebe eine Abtriebswelle aufweist, die über zwei Freiläufe an je ein Antriebsrad angeschlossen ist, wobei das Zugmittelgetriebe derart mit den beiden Antriebsrädern verbunden ist, daß bei einer Bewegung des Sitzes jeweils ein Freilauf eingekuppelt und der andere Freilauf ausgekuppelt ist.

Ein derartiges Sportgerät in Form eines Fahrrades ist durch die US-A-3 979 135 bekannt geworden. Bei diesem ist der Sitz auf nach unten konvexen Schienen auf Rollen verfahrbar gelagert und vorne sowie hinten an ein Zugmittel (Kette) angeschlossen. Die Kette ist über Umlenkräder zu einem Zwischenrad geführt, das seinerseits über eine endlose Kette zwei miteinander kämmende Zahnräder samt Freiläufen antreibt. Die miteinander gekuppelten Freiläufe wirken auf ein Abtriebsrad, das über eine endlose Kette mit dem Antriebsrad des Hinterrades verbunden ist. Nachteilig bei dieser Konstruktion ist der geringe Umschlingungswinkel des Zwischenrades und der große Aufwand an Ketten und Kettenrädern. Ein ähnliches Fahrrad ist in der DE-C-88 425 beschrieben.

Aus der DE-C-106 109 ist ein Fahrradantrieb mit schwingendem Sitz bekannt, wobei der Sitz auf einem Gelenkviereck gelagert ist und im wesentlichen waagrecht hin- und herschwingen kann. Ein Nachteil dabei ist, daß das Gelenkviereck gekreuzte Schwingarme aufweist, weshalb sich der Sitz bei der Fahrt auf einer nach oben konvexen Bahn bewegt, was den natürlichen Bewegungsabläufen des menschlichen Körpers zuwiderläuft. Die Handgriffe sowie die Fußstützen sind mit dem Sitz verbunden, weshalb die Kraft der Armmuskeln nicht ausgenutzt werden kann und das Fahren sowie Lenken schwierig ist. Ein ähnliches Fahrrad, dessen Sitz auf einem Gelenkviereck ruht, aber im wesentlichen eine Auf- und Abbewegung vollführen kann, geht aus der GB-A-2 171 655 hervor.

Bei einer weiteren, der WO-A-91 08 943 entnehmbaren Konstruktion ist der Sitz auf einem in Längsrichtung verlaufenden, horizontalen Rahmenrohr verschiebbar gelagert und mit einem modifizierten Kurbel-Kettentrieb verbunden, wobei durch Vorwärts- und Rückwärtsbewegungen des Sitzes das Fahrrad entweder allein in Bewegung versetzt oder der Kurbeltrieb unterstützt werden kann. Die Bewegungsabläufe sind Beinbewegungen wie bei einem herkömmlichen Fahrrad und gegebenenfalls ähnlich wie beim Rudern in einem Sportboot mit Rollsitz. Auf diese Weise soll der gesamte Körper in Bewegung versetzt und gestärkt werden. Nachteilig bei diesem Fahrrad ist die Gleitlagerung des Sitzes, die nicht nur eine zusätzliche Führung, sondern auch eine Schmierung erfordert, was wiederum eine Verschmutzungsgefahr bedeutet. Weiters ist nachteilig, daß die Körperbewegungen, nämlich kreisende Beinbewegungen, pendelnde Körperbewegungen und Beuge- und Streckbewegungen der Arme, schwierig zu koordinieren sind und die Fahrsicherheit beeinträchtigen.

Abgesehen von den erwähnten muskelkraftbetriebenen Sportgeräten mit beweglichen Sitzen sind auch solche mit festem Sitz bekanntgeworden, bei denen der Antrieb entweder über einen zweiarmigen Schwenkhebel (NL-A-8 200 455, US-A-4 886 287 oder über verschwenkbare Pedale (EP-A-0 000 228) erfolgt, die jeweils mit dem Zugmittel in Verbindung stehen. Ebenso sind muskelkraftbetriebene Fahrzeuge wie Fahrräder bekannt, bei denen der Antrieb durch abwechselndes Vor- und Rückbewegen von zwei einarmigen Hebeln erfolgt (GB-A 1 413 844). Bei schwimmfähigen Sportgeräten (Schwimmfahrräder) sind als Antrieb Schiffsschrauben od.dgl. üblich (vgl. FR-A-2 689 086), und für Antriebsverstärkungen sind seit langem direkt auf die Antriebsachse wirkende Reibradantriebe in Verwendung (z.B. FR-A-1 187 269).

Ziel der Erfindung ist die Schaffung eines muskelkraftbetriebenen Sportgerätes, insbesondere eines Fahrzeuges, das den Einsatz des gesamten Körpers erfordert und somit das Training des Bewegungsapparates sowie möglichst vieler Muskeln bewirkt, außerdem die Wirbelsäule und die Bandscheiben schont, im Falle der Ausbildung als Fahrzeug eine rasche Fortbewegungsgeschwindigkeit gewährleistet und dem Benutzer Freude und Spaß bietet.

Dieses Ziel wird mit einem muskelkraftbetriebenen Sportgerät der eingangs genannten Art erfindungsgemäß dadurch erreicht, daß der Sitz, in an sich bekannter Weise über wenigstens ein Gelenkviereck mit dem Basiskörper verbunden ist, daß dieses Gelenkviereck am Basiskörper hängend montiert ist, daß die beiden Antriebsräder auf einer einzigen, gemeinsamen Abtriebswelle sitzen, daR jedes mit dem Sitz verbundene Zugmittel über die Antriebsräder geführt ist und daß die Freiläufe gleichsinnig wirkend angeordnet sind.

Die Bewegungsabläufe des menschlichen Körpers bei Verwendung des erfindungsgemäßen Sportgerätes sind ähnlich wie beim Rudern und verlaufen harmonisch, wobei viel mehr Muskeln betätigt werden als etwa beim Radfahren und somit praktisch der gesamte Körper trainiert wird. Aus diesen Gründen kann auch mehr Kraft auf den Antrieb übertragen werden. Im Falle der Ausbildung des Gerätes als Fahrzeug, insbesondere als Fahrrad, kann es niedriger gebaut sein, weil kein Kurbeltrieb vorhanden ist. Daher kann auch der Sitz in geringerer Höhe angebracht sein, wodurch der Schwerpunkt tiefer liegt und das Auf- und Absteigen sowie das Anfahren und Stehenbleiben erleichtert ist. Das Gerät kann auch von Körperbehinderten, wie Beinamputierten, verwendet und sicher benutzt werden, was insbesondere im Falle eines Fahrrades vorteilhaft ist.

Eine bevorzugte Ausführungsform der Erfindung ist dadurch gekennzeichnet, daß zwei gegebenenfalls über Umlenkrollen geführte Zugmittel vorgesehen sind, von denen jedes mit einem Ende am Sitz oder am Gelenkviereck, mit dem anderen Ende an einem der beiden Antriebsräder befestigt ist, die ihrerseits jeweils mit einem Federkraftspeicher verbunden sind.

Vorteilhaft ist ferner, wenn die beiden Antriebsräder unterschiedliche Durchmesser aufweisen, weil die auf den Antrieb wirkende Muskelkraft bei der Rückwärtsbewegung größer ist als bei Vorwärtsbewegung.

Es hat sich als zweckmäßig erwiesen, wenn das am größeren Antriebsrad befestigte Zugmittel von dessen Unterseite zur hinteren Schwinge, das am kleineren Antriebsrad befestigte Zugmittel von dessen Oberseite zur vorderen Schwinge des Gelenkviereckes geführt ist.

Da der Kettentrieb einen Antrieb mit äußerst günstigem Wirkungsgrad darstellt, kann bei einer Ausführungsform der Erfindung jedes Zugmittel in an sich bekannter Weise zumindest abschnittsweise aus einer Kette oder einem Zahnriemen und abschnittsweise aus einem Stahlseil bestehen, wobei die Antriebsräder in an sich bekannter Weise Ketten- bzw. Zahnräder sind.

Eine besonders vorteilhafte Ausführungsform zeichnet sich dadurch aus, daß der Sitz um eine quer zur Längsrichtung verlaufende horizontale Achse schwenkbar gelagert und seine Schwenkbewegung vorzugsweise durch Anschläge begrenzt ist. Auf diese Weise erhält der Benutzer mehr Bewegungsfreiheit bei zugleich optimaler Kraftausnutzung und größtmöglicher Schonung der Wirbelsäule und der Bandscheiben, weil die Sitzfläche stets im wesentlichen parallel zu den Bandscheiben verläuft.

Es ist von Vorteil, wenn wenigstens ein Gelenk jedes Gelenkviereckes verstellbar ausgebildet ist, weil auf diese Weise das Gerät dem jeweiligen Benutzer angepaßt werden kann. Weiters bietet die Verstellbarkeit der Gelenkstellen die Möglichkeit, die Bahn des Sitzes je nach Wunsch im wesentlichen geradlinig, konkav nach oben oder konvex nach oben zu gestalten. Verläuft die Bahn konkav nach oben, so werden mit dem Körper Bewegungen wie auf einer Schaukel vollführt, wodurch unter Ausnutzung der Schwerkraft eine große Kraft auf den Antrieb übertragen wird.

Bei einer alternativen Ausführungsform der Erfindung kann der Sitz an einer Brücke angebracht sein, die an dem bzw. den Gelenksvierecken montiert ist.

Zur Anpassung an die jeweilige Körperkraft des Benutzers kann vorgesehen sein, das bzw. die Zugmittel an den Schwingen jedes Gelenkviereckes in unterschiedlichen Abständen von deren rahmenfesten Gelenken anzuschließen.

Ein für zwei Personen gleichzeitig benutzbares erfindungsgemäßes Sportgerät zeichnet sich dadurch aus, daß ein weiterer Sitz vorgesehen ist, der in derselben Weise wie der erste Sitz gelagert ist und über Zugmittel mit der Abtriebswelle in Verbindung steht, wobei dem zweiten Sitz Fußstützen und Handgriffe zugeordnet sind, die in Längsrichtung des Gerätes den ersten Fußstützen und Handgriffen gegenüberliegen. Ein solches Gerät kann zB als Tandemfahrrad oder als Boot ausgebildet sein.

Nachstehend wird die Erfindung anhand bevorzugter Ausführungsbeispiele näher erläutert, die in den Zeichnungen schematisch und vereinfacht dargestellt sind; es zeigen Fig. 1 eine schaubildliche Ansicht einer ersten Ausführungsform der Erfindung, Fig. 2 eine Seitenansicht dieser Ausführungsform von rechts, Fig. 3 eine Seitenansicht dieser Ausführungsform von links, Fig. 4 eine Seitenansicht von rechts einer zweiten Ausführungsform der Erfindung, Fig. 5 eine Seitenansicht dieser Ausführungsform von links, Fig. 6 eine Seitenansicht von rechts einer dritten Ausführungsform der Erfindung, Fig. 7 eine Seitenansicht dieser Ausführungsform von links, Fig. 8 eine Seitenansicht von rechts einer vierten Ausführungsform der Erfindung, Fig. 9 eine Seitenansicht dieser Ausführungsform, von links, Fig. 10 und 11 je eine Seitenansicht von rechts einer fünften Ausführungsform, Fig. 12 und 13 je eine Seitenansicht dieser Ausführungsform, von links, Fig. 14 eine Seitenansicht von links einer als Tandem ausgebildeten weiteren Ausführungsform, Fig. 15 ein als Fahrrad ausgebildetes Sportgerät von rechts hinten gesehen, Fig. 16 das Fahrrad von links hinten gesehen und Fig. 17 eine Variante des Fahrrades von rechts hinten gesehen.

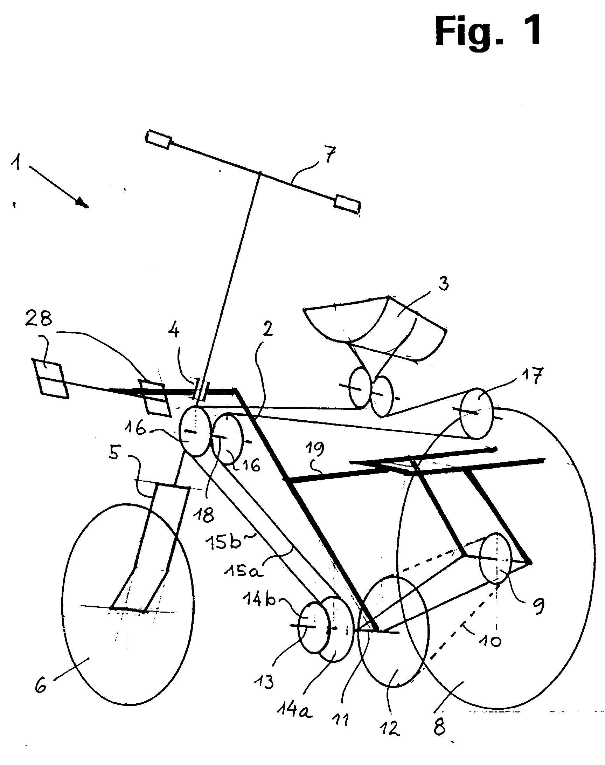

Die Fig. 1 bis 3 zeigen eine erste Ausführungsform der Erfindung, die als Fahrrad 1 ausgebildet ist. Das Fahrrad 1 weist einen Rahmen 2 als Grundkörper auf, der wie üblich und im Handel erhältlich aufgebaut und deshalb nicht mit allen Einzelheiten dargestellt ist. Mit Ausnahme der Montage des Sitzes 3 entspricht der Rahmen 2 demjenigen eines herkömmlichen Fahrrades und besitzt vorne einen Gabelkopf 4, in dem eine Gabel 5 für das Vorderrad 6 drehbar gelagert ist, wobei die Gabel 5 an der Oberseite mit einem Lenker 7 samt Handhaben versehen ist. An der Hinterseite des Rahmens 2 befindet sich das Hinterrad 8, das mit einem Ritzel 9 (oder einem Ritzelsatz zur Gangschaltung samt Freilauf) verbunden ist, das wiederum über ein Zugmittel, insbesondere eine Kette 10 mit einem etwa in der Mitte des Fahrrades 1 im Kurbellager 11 gelagerten Kettenrad 12 verbunden ist.

Das Kettenrad 12 ist über eine Abtriebswelle 13 mit zwei Antriebsrädern 14a, 14b verbunden, in die jeweils ein Freilauf bekannter Bauart eingebaut ist, wobei die Freiläufe im selben Sinne wirken. Die Antriebsräder 14a, 14b weisen aus den bereits erläuterten Gründen unterschiedliche Durchmesser auf und sind mit je einem Federkraftspeicher verbunden, der im Sinne des Freilaufes wirkt. An jedes Antriebsrad 14a, 14b ist ein Zugmittel 15a, 15b angeschlossen, das über einen vorbestimmten Winkel um das jeweilige Antriebsrad 14a, 14b geschlungen ist. Das an das größere Antriebsrad 14a angeschlossene Zugmittel 15a ist über eine in Nähe des Gabelkopfes 4 gelagerte Umlenkrolle 16 nach hinten und dort über eine über dem Hinterrad 8 gelagerte weitere Umlenkrolle 17 nach vorne geführt. Das an das kleinere Antriebsrad 14b angeschlossene Zugmittel 15b ist ebenfalls über eine in Nähe des Gabelkopfes 4, insbesondere mit der erstgenannten Umlenkrolle 16 auf einer gemeinsamen Achse 18 sitzenden Umlenkrolle 16 nach hinten geführt. Beide Zugmittel 14a, 14b sind an dem schalenförmigen Sitz 3 befestigt.

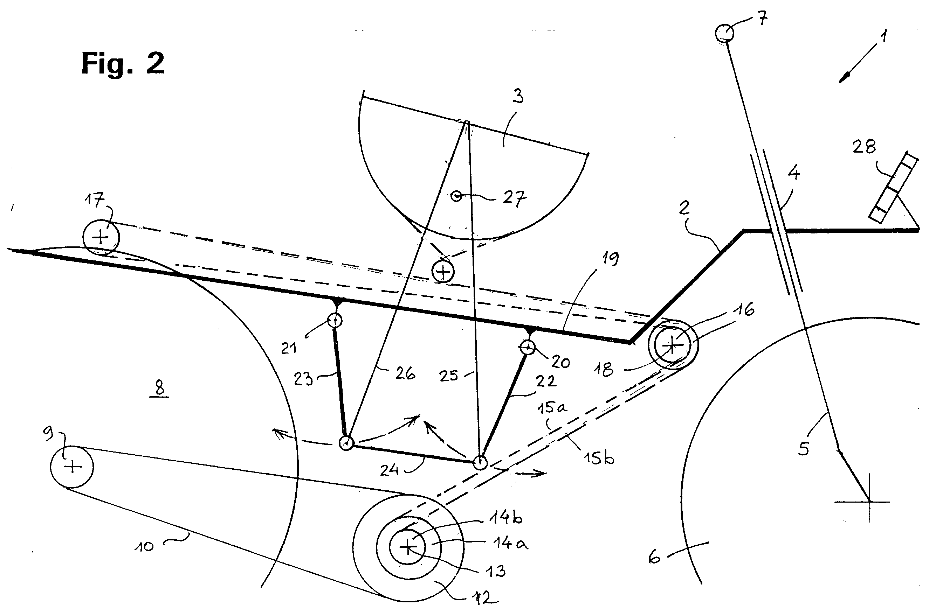

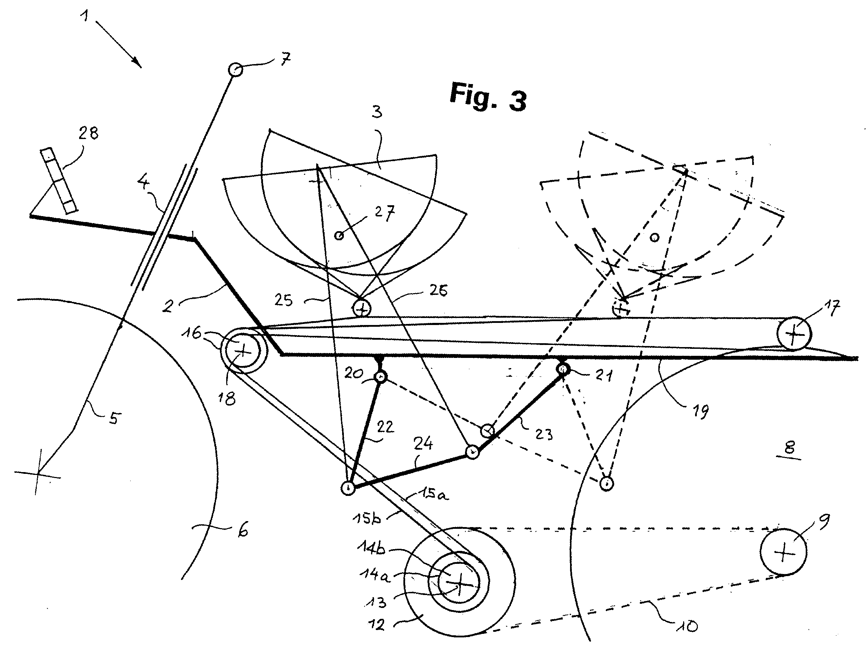

Die Montage des Sitzes 3 ist in Fig. 2 und 3 gezeigt. Am Rahmenrohr 19 sind zwischen Vorderrad 6 und Hinterrad 8 zwei Gelenke 20, 21 vorgesehen, die vorzugsweise in Längs- und Höhenrichtung verstellbar sind. An den Gelenken 20, 21 sind beiderseits des Rahmens 2 Schwingen 22 bzw. 23 angelenkt, wobei vorzugsweise die vorderen und hinteren Schwingen 22, 23 gleich lang sind. Die freien Enden der Schwingen 22, 23 sind über eine Strebe 24 gelenkig miteinander verbunden, wobei vorzugsweise ihr gegenseitiger Abstand mit Hilfe der Strebe 24 einstellbar ist. Weiters sind an den freien Enden der Schwingen 22, 23 Arme 25, 26 angelenkt, die nach oben verlaufen und den Sitz 3 tragen, der vorzugsweise um eine horizontale, quer zum Fahrrad 1 verlaufende Achse 27 mittels (nicht gezeigter) Anschläge begrenzt verschwenkbar ist. Alternativ kann der Sitz 3 über je ein Gelenk mit den Armen 25, 26 nach Art eines Gelenkviereckes verbunden sein.

Die Schwingen 22, 23 und die Strebe 24 bilden somit ein Gelenkviereck, das von der Seite betrachtet im wesentlichen die Form eines gleichschenkeligen Trapezes zeigt und dessen Kinematik wegen der mehreren Verstellmöglichkeiten in großen Grenzen veränderbar ist, wobei sich der Sitz 3 längs einer im wesentlichen geradlinigen, konkav nach oben oder konvex nach oben verlaufenden Bahn bewegen kann. Diese durch den Fahrer bewirkte Hin- und Herbewegung wird mittels der Zugmittel 15a, 15b und der Kette 10 auf das Hinterrad 8 übertragen.

Da also der Antrieb durch ruderartige Bewegungen des Fahrers erfolgt und keine Tretkurbeln vorhanden sind, ist der Rahmen 2 oberhalb des Vorderrades 6 mit Fußstützen 28 versehen, die ebenfalls bevorzugterweise verstellbar angebracht sind.

Zum Fahren stößt sich der Fahrer mit den Füßen an den Fußstützen 28 ab und bewegt dadurch den Sitz 3 nach hinten, wodurch das Zugmittel 15b vom kleineren Antriebsrad 14b abgezogen wird und wegen des gesperrten Freilaufes dieses sowie weiters das Kettenrad 12, das Ritzel 9 und das Hinterrad 8 in Drehung versetzt werden. Anderseits läuft der im größeren Antriebsrad 14a eingebaute Freilauf frei durch, und der zugeordnete Federkraftspeicher wickelt das Zugmittel 15a auf dem Antriebsrad 14a auf. Am Ende seiner Rückwärtsbewegung zieht sich der Fahrer mit den Armen zum Lenker 7, wobei das Zugmittel 15a vom größeren Antriebsrad 14a abgezogen wird und dieses wegen des gesperrten Freilaufes über das Kettenrad 12, Zugmittel bzw. Kette 10 und Ritzel 9 das Hinterrad 8 antreibt. Dabei läuft der im kleineren Antriebsrad 14b eingebaute Freilauf frei durch, und sein Zugmittel 15b wird vom Federkraftspeicher auf das Antriebsrad 15b aufgewickelt.

Am Ende jeder Vorwärts- und Rückwärtsbewegung des Sitzes 3 schwenkt dieser ein wenig um die Achse 27, wodurch die Körperbewegungen unterstützt werden.

Da der Mensch in den Beinen mehr Kraft als in den Armen hat, besitzen die Antriebsräder 14a, 14b unterschiedliche Durchmesser, um diesen Unterschied auszugleichen.

In Fig. 2 sind mit vollen Linien der Sitz 3 und das Gelenkviereck in mittlerer Lage zwischen den Totpunkten ihrer Bewegung gezeigt; in Fig. 3 sind mit vollen Linien der Sitz 3 sowie das Gelenkviereck in der vordersten Lage sowie der Sitz 3 in seinen extremen Kipplagen und mit strichlierten Linien Sitz 3 und Gelenkviereck in ihrer hintersten Lage sowie ebenfalls der Sitz 3 in seinen extremen Kipplagen gezeigt.

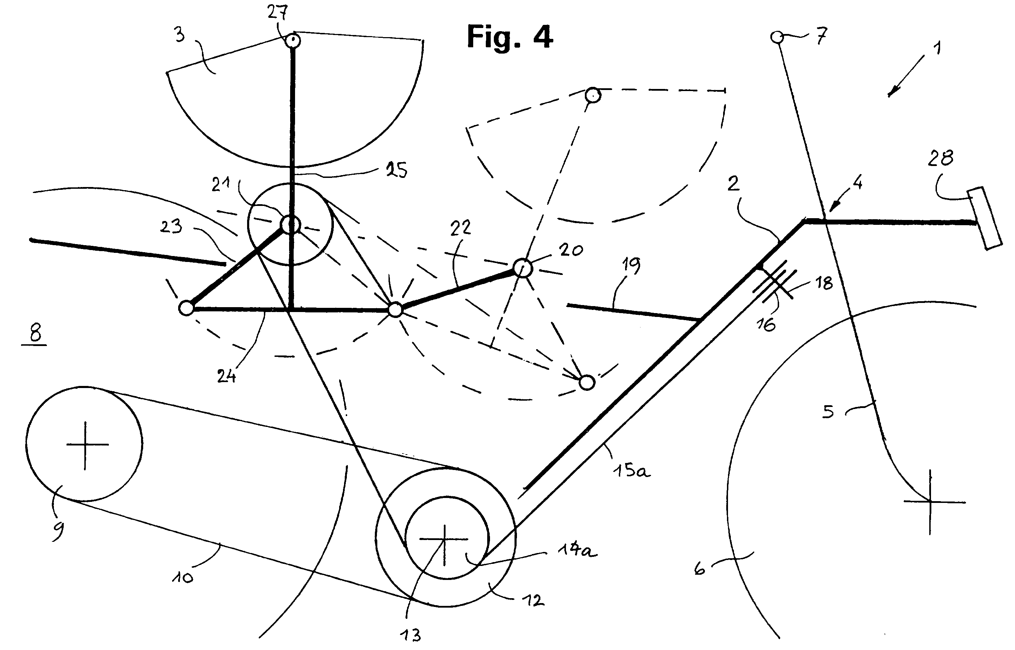

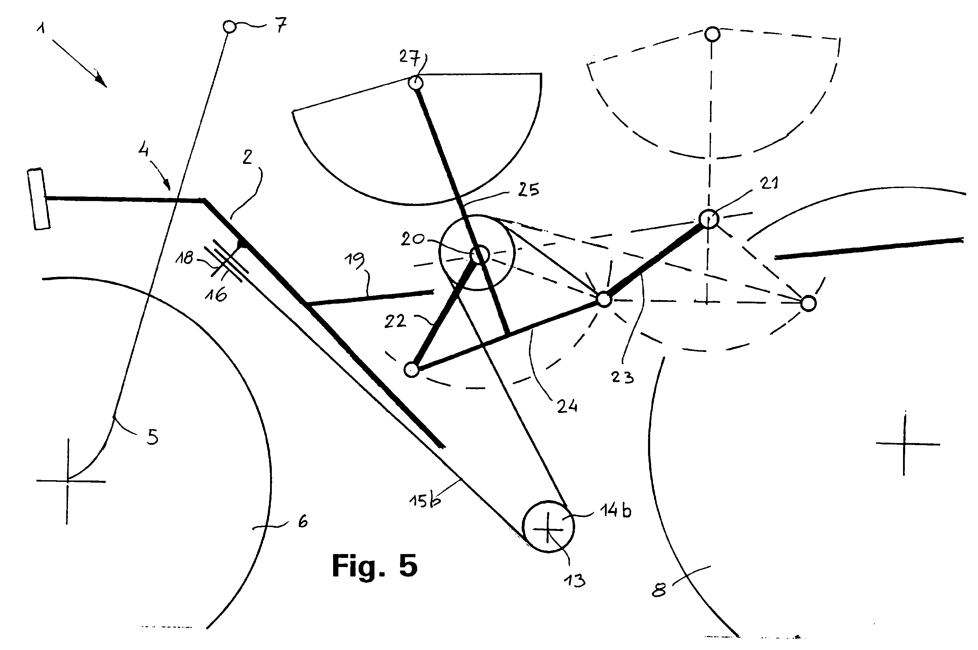

Die Fig. 4 und 5 zeigen eine zweite Ausführungsform der Erfindung in Form eines Fahrrades 1, bei der der Sitz 3 ähnlich montiert ist wie bei der ersten Ausführungsform, der Zugmittelantrieb jedoch unterschiedlich ausgebildet ist. Die Montage des Sitzes 3 ist ähnlich wie vorhin erläutert, bloß daß die Gelenke 20, 21 der Schwingen 22, 23 in einem Abstand über dem Rahmenrohr 19 angebracht sind und ansteile zweier Arme nur ein Arm 25 vorgesehen ist, der an der Strebe 24 befestigt ist. Mit vollen Linien ist der Sitz 3 in seiner hintersten Lage, mit strichlierten Linien in seiner vordersten Lage dargestellt.

Bei dieser Ausführungsform ist das Zugmittel 15 zumindest abschnittweise als Kette ausgebildet. Das eine Ende des Zugmittels 15 ist an der rechten Seite des Rahmens 2 (Fig. 4) im Bereich der Verbindungsstelle von vorderer Schwinge 22 und Strebe 24 an einem der beiden Bauteile befestigt, über eine dahinter, vorzugsweise auf der Achse der hinteren Schwinge 23 gelagerte Umlenkrolle nach unten zu einem als Kettenrad ausgebildeten Antriebsrad 14a, in dem ein Freilauf eingebaut ist, geführt. Von diesem verläuft das Zugmittel 15 (hier: 15a) zu einer in Nähe des Gabelkopfes gelagerten Umlenkrolle 16, deren Achse 18 in einer in der Längsrichtung des Rahmens 2 verlaufenden Ebene liegt. Zweckmäßigerweise dient diese Umlenkrolle 16 zugleich als Spannrolle für das Zugmittel 15. An dieser vorderen Umlenkrolle 16 wird das Zugmittel zur linken Seite des Rahmens 2 (Fig. 5) umgelenkt und zu einem zweiten Antriebsrad 14b mit eingebautem Freilauf und kleinerem Durchmesser als das andere Antriebsrad 14a geführt. Von demselben verläuft das Zugmittel 15 (hier: 15b) über eine vorzugsweise auf der Achse der vorderen Schwinge 22 gelagerte Umlenkrolle zur Befestigungsstelle, die sich im Bereich der Verbindungsstelle zwischen hinterer Schwinge 23 und Strebe 24 an einem dieser beiden Bauteile befindet.

Auch hier wirken die Freiläufe in den beiden Antriebsrädern 14a, 14b gleichsinnig, sodaß die Hin- und Herbewegung des Zugmittels 15 in eine praktisch kontinuierliche Drehbewegung des Kettenrades 12 umgesetzt wird.

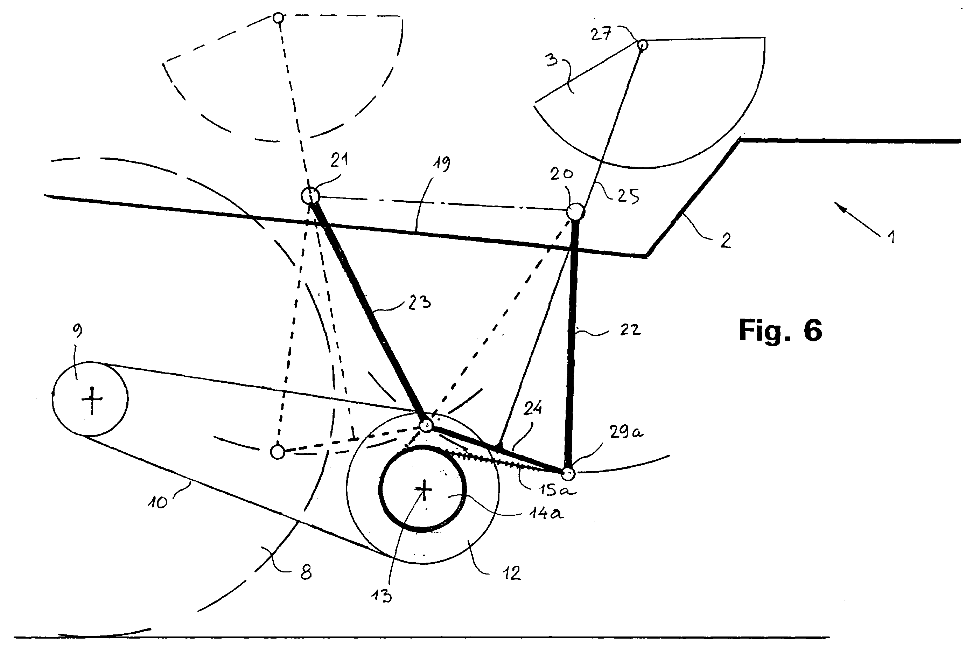

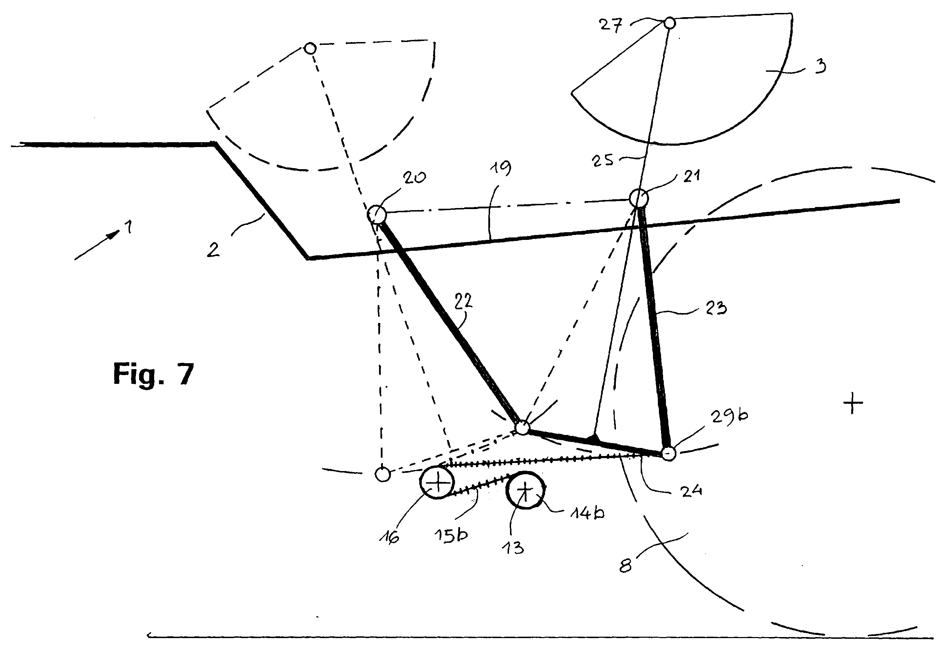

Die Fig. 6 und 7 zeigen eine dritte Ausführungsform der Erfindung, die im wesentlichen den gleichen Aufbau besitzt wie die zweite. Allerdings sind bei ihr zwei beiderseits des Rahmens angeordnete Zugmittel 15a und 15b zwischen dem Gelenkviereck und den Antriebsrädern 14a bzw. 14b vorgesehen, welch letztere mit je einem im selben Sinne wirkenden Freilauf und einem Federkraftspeicher versehen sind. Das an der rechten Rahmenseite (Fig. 6) angeordnete Zugmittel 15a ist mit dem einen Ende im Bereich des Gelenkes 29a zwischen vorderer Schwinge 22 und Strebe 24 an einem der beiden Bauteile angeschlossen und verläuft nach hinten zum durchmessergrößeren Antriebsrad 14a, auf dem es über einen Winkel, der zumindest der Länge der Bahn des erwähnten Gelenkes 29a entspricht, aufgewickelt und befestigt ist. Das an der linken Rahmenseite (Fig. 7) angeordnete Zugmittel 15b ist mit dem einen Ende im Bereich des Gelenkes 29b zwischen hinterer Schwinge 23 und Strebe 24 an einem dieser Bauteile befestigt und verläuft nach vorn zu einer Umlenkrolle 16 und über diese nach hinten zum durchmesserkleineren Antriebsrad 14b, auf dem es über einen Winkel, der zumindest der Länge der Bahn des Gelenkes 29b entspricht, aufgewickelt und befestigt ist.

Falls der vordere Totpunkt der Bahn des Gelenkes 29b in einem ausreichenden Abstand vom Antriebsrad 14b liegt, kann das Zugmittel 15b unmittelbar, d.h. ohne Führung über die Umlenkrolle 16 zum Antriebsrad 14b geführt sein.

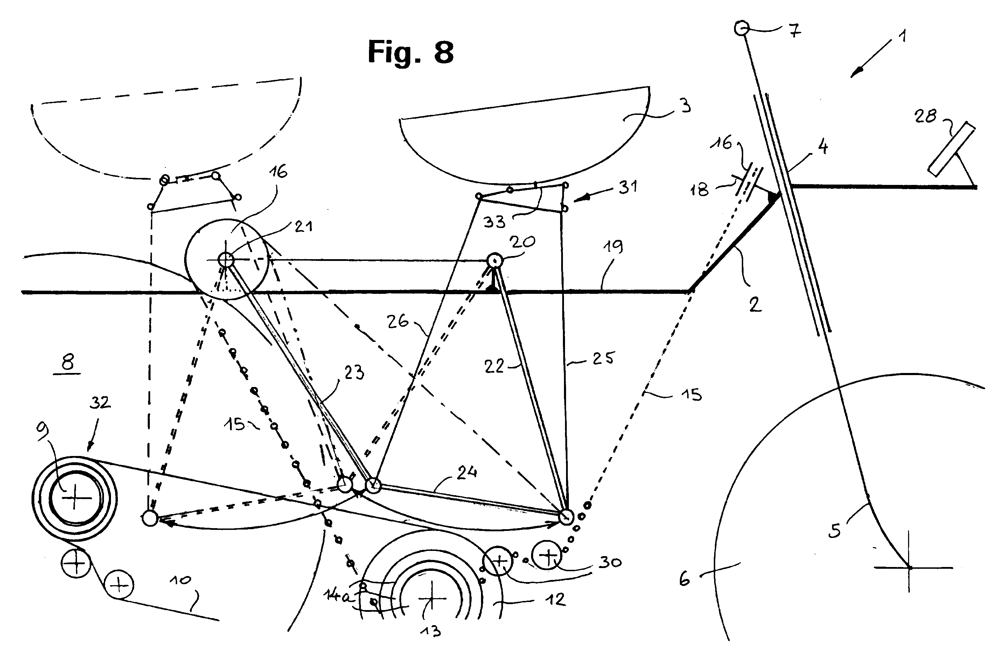

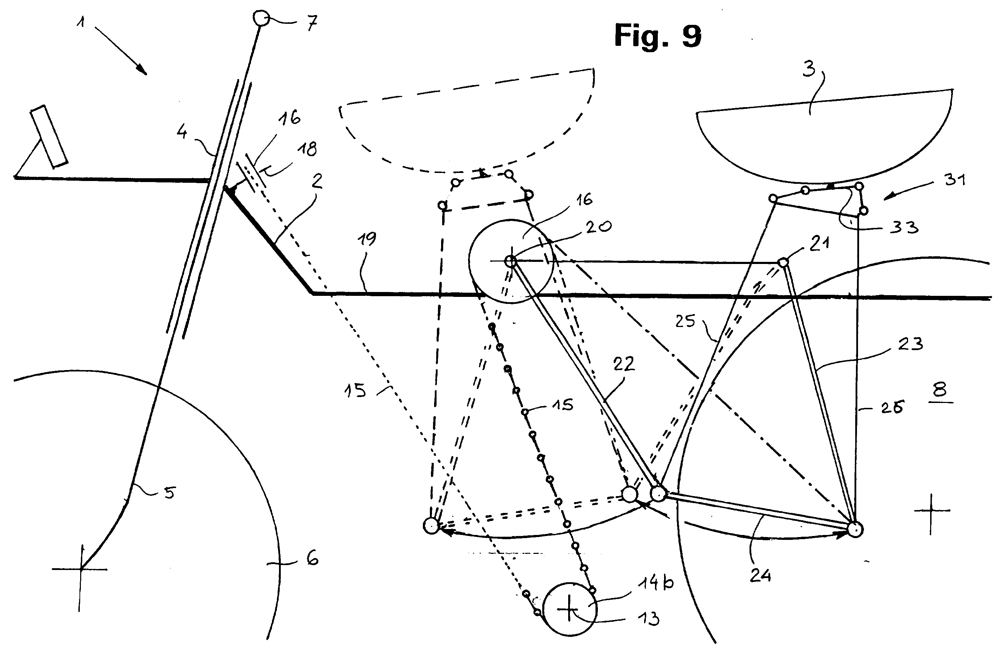

In den Fig. 8 und 9 ist eine vierte Ausführungsform der Erfindung dargestellt, die im wesentlichen den vorher beschriebenen entspricht. Auch in diesen Figuren sind Sitz 3 und Gelenkviereck mit vollen bzw. strichlierten Linien jeweils in den Endlagen der Bewegung gezeigt. Das Zugmittel 15 ist ähnlich wie bei der in Fig. 4 und 5 gezeigten zweiten Ausführungsform, allerdings über zusätzliche Spannrollen 30 geführt.

Der Sitz 3 ist mittels zweier Gelenkvierecke an den Armen 25, 26 begrenzt schwenkbar angebracht, wobei die Gelenkvierecke über eine Brücke 33 miteiander verbunden sind, die zur Montage des Sitzes 3 dient. Die Elemente der Gelenkvierecke bestehen vorzugsweise aus Flachmaterial, wobei die Elemente durch Federkraft angenähert in der Form eines gleichschenkeligen Trapezes gehalten sind. Insbesondere sind zur Ausübung der Federkraft Gummiblöcke im Innenraum der Elemente der Gelenkvierecke angeordnet.

Die Besonderheit dieser Ausführungsform liegt darin, daß außer einer üblichen Gangschaltung 32 am Hinterrad 8 eine zusätzliche Gangschaltung in Form mehrerer Antriebsräder 14a vorgesehen ist. Zweck dieser Maßnahme ist die Erleichterung des Bergauffahrens, weil bei solchen Fahrten der Fahrer sein Körpergewicht hochziehen muß. Durch die Auswahlmöglichkeit unter verschieden großen Getriebeübersetzungen kann der Fahrer den den jeweiligen Steigungen angepaßten Körpereinsatz wählen.

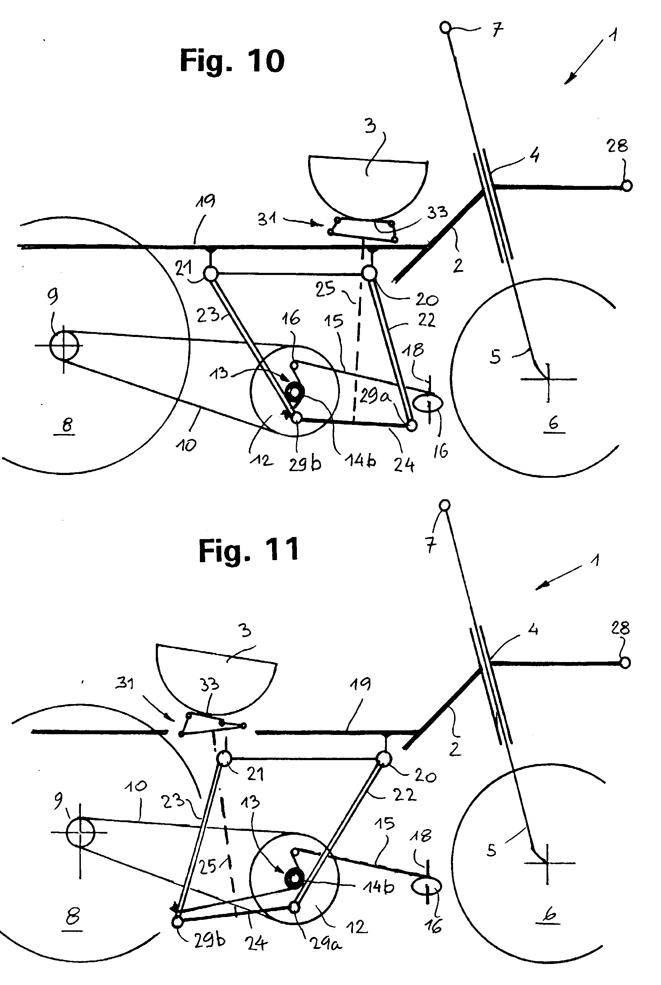

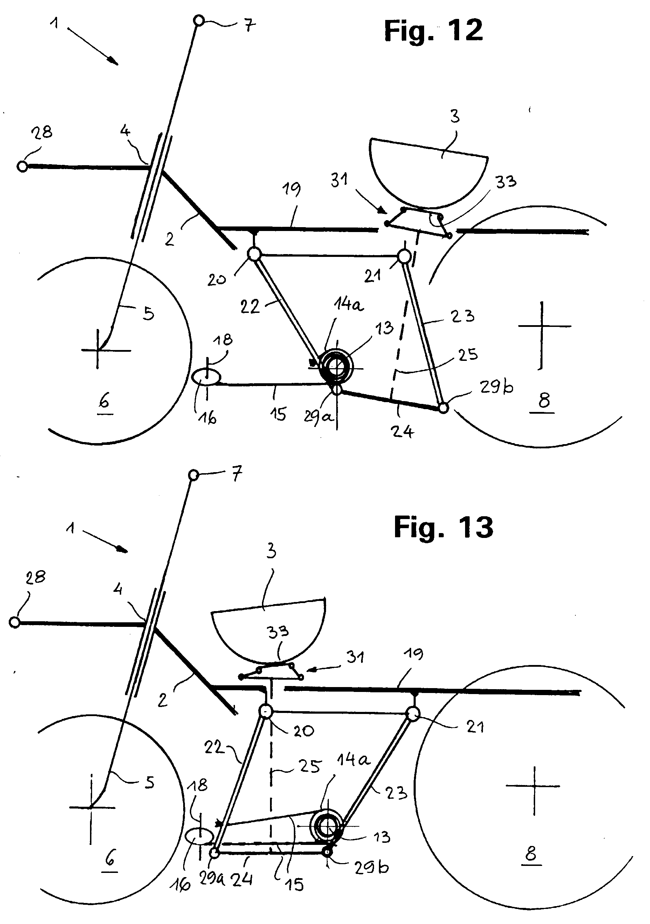

Die Fig. 10 bis 13 zeigen eine Variante dieser Ausführungsform, bei der ein einzigen Zugmittel 15 Verwendung findet. Die Fig. 10 und 11 stellen je eine Ansicht von rechts dar, wobei der Sitz 3 in seiner vorderen bzw. hinteren Endlage gezeigt ist. Die Fig. 12 und 13 stellen das Fahrrad 1 von links gesehen dar, wobei der Sitz 3 in seiner hinteren bzw. vorderen Endlage gezeigt ist. Wie aus den Figuren ersichtlich, ist das Zugmittel 15 an der linken vorderen Schwinge 22 befestigt und verläuft von dort zum durchmessergrößeren Antriebsrad 14a, über dieses nach vorn zu einem im wesentlichen horizontal angeordneten Umlenkrad 16 und über dieses auf die rechte Seite des Fahrrades 1 und zu einem weiteren Umlenkrad 16, von dem es über das durchmesserkleinere Antriebsrad 14b zur hinteren rechten Schwinge 23 geführt und an derselben befestigt ist.

Anstelle zweier Antriebsräder 14a, 14b mit unterschiedlichen Durchmessern können zwei Antriebsräder 14a, 14b mit gleichem Durchmesser vorgesehen sein, in welchem Fall das Zugmittel 15 in unterschiedlichen Abständen von den Gelenken 20, 21 an den Schwingen 22, 23 befestigt ist, um mit den unterschiedlich langen Hebelsarmen die unterschiedliche Muskelkraft der Arme und Beine auszugleichen.

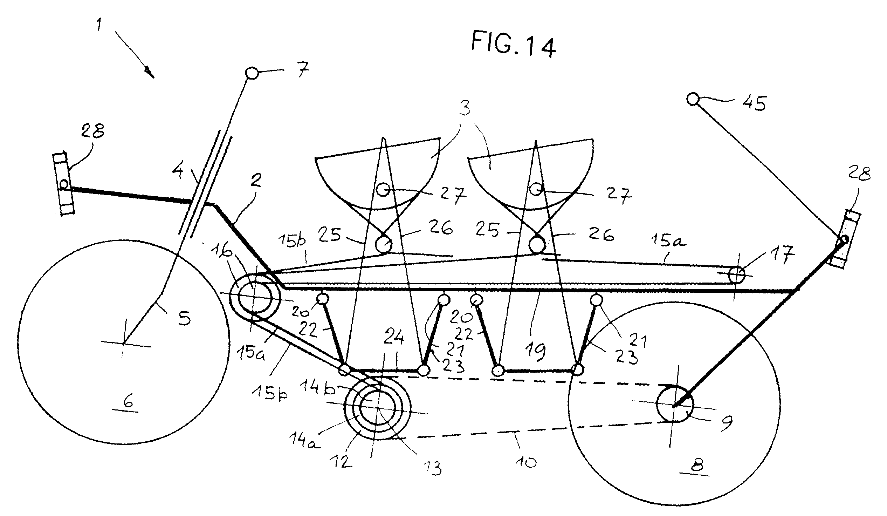

Fig. 14 zeigt ein als Tandem ausgebildetes Fahrrad 1 von links, bei dem die Sitze 3 wie bei den Ausführungsformen nach Fig. 2 bis 9 an Gelenkvierecken angebracht sind. Die beiden Zugmittel 15a, 15b sind jeweils einerseits an einem der Sitze 3 und anderseits an in den Antriebsrädern 14a, 14b eingebauten Federkraftspeichern befestigt. An der Rückseite des Tandems sind Fußstützen 28 und eine Haltestange 45 mit Handhaben für den hinteren Fahrer vorgesehen, der Rücken an Rücken mit dem vorderen Fahrer sitzt.

Obwohl vorstehend die Erfindung anhand von einspurigen Fahrrädern erläutert ist, versteht sich, daß sie auch auf mehrrädrige, insbesondere zweispurige Fahrräder anwendbar ist. Bei einer Variante der Erfindung kann das hintere Umlenkrad 17 mit einer unmittelbar auf das Hinterrad 8 reibungsschlüssig wirkenden Rolle, vorzugsweise mit konkaver Mantelfläche gekuppelt sein. Diese Rolle kann auch mit einem Ritzel gekuppelt sein, das von der entsprechend geführten Kette 12 angetrieben wird.

Das Fahrrad kann auch drei oder vier Räder aufweisen, wobei zwei Sitze nebeneinander vorgesehen sind und die daran angeschlossenen Zugmittel über jeweils ein Paar Freiläufe auf eine gemeinsame Abtriebswelle oder unmittelbar auf jeweils denselben zweier Freiläufe wirken.

Da beim Fahren die Knie des Fahrers in den Bereich des Lenkers gelangen, kann zur Erleichterung des Lenkens in die Lenkung des Vorderrades ein Übersetzungsgetriebe, vorzugsweise ein Planetengetriebe eingebaut sein, u.zw. derart, daß ein kleiner Lenkeinschlag einen größeren Einschlag des Vorderrades ergibt.

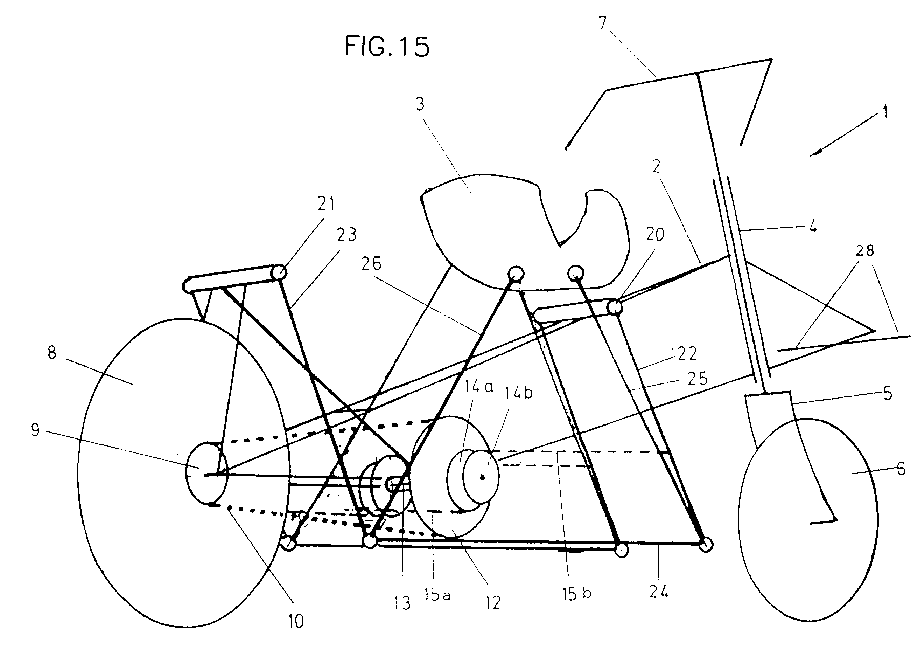

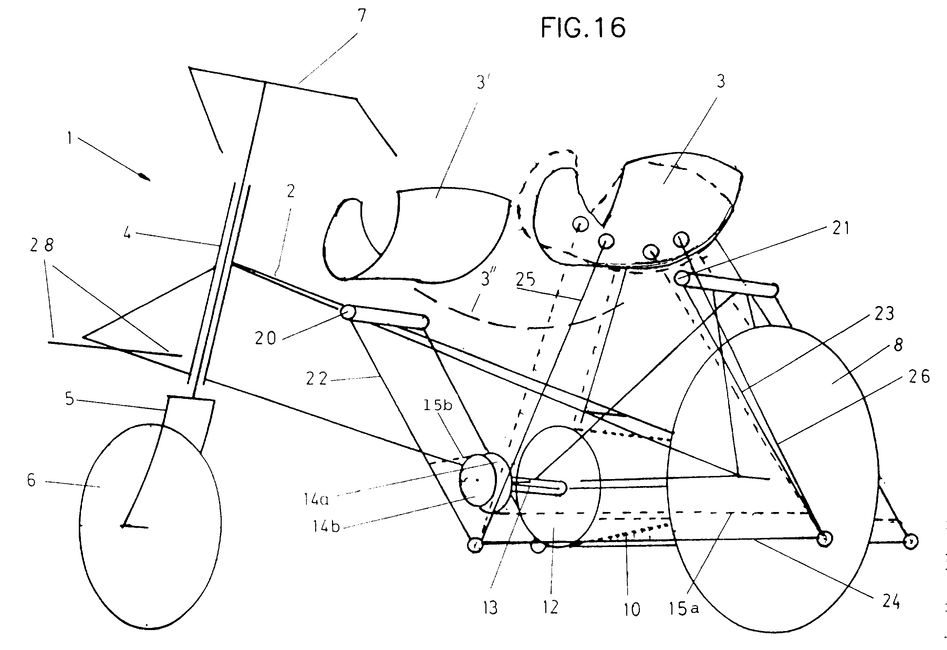

In Fig. 15 und 16 ist ein Fahrrad 1 gezeigt, das einen Rahmen 2 und einen Sitz 3 aufweist. An der Vorderseite des Rahmens 2 ist in einem Gabelkopf 4 eine Gabel 5 drehbar gelagert, an der ein Vorderrad 6 und ein Lenker 7 montiert sind. Weiters sind zwei Fußstützen 28 vorgesehen.

Das Hinterrad 8 des Fahrrades 1 ist über ein Ritzel 9 und eine endlose Kette 10 mit einem Kettenrad 12 verbunden, das auf einer in einem Kurbellager gelagerten Abtriebswelle 13 sitzt.

Der Sitz 3 ist wie bei den vorhin beschriebenen Ausführungsformen mit Hilfe zweier, beiderseits des Rahmens 2 angeordneter Gelenkvierecke montiert.

An die Abtriebswelle 13 sind beiderseits des Rahmens 2 je zwei Antriebsräder 14a und 14b angeschlossen, in denen gleichsinnig wirkende Freiläufe sowie ferner Federkraftspeicher eingebaut sind.

An jeden Federkraftspeicher ist ein Zugmittel 15a bzw. 15b angeschlossen, das mit seinem anderen Ende mit einer der Schwingen 22, 23 verbunden ist. Dabei verläuft das eine Zugmittel 15a vom größeren Antriebsrad 14a von dessen Unterseite zur hinteren Schwinge 23 und das andere Zugmittel 15b vom kleineren Antriebsrad 14b von dessen Oberseite zur vorderen Schwinge 22.

In Fig. 16 ist außerdem der Sitz 3 in seiner hinteren Endlage sowie in seiner mit 3' bezeichneten vorderen Endlage und die Bahn 3'' des Sitzes 3 zwischen den Endlagen dargestellt. Aus Gründen der Übersichtlichkeit sind Teile des Antriebsmechanismus an der rechten Seite des Fahrrades weggelassen.

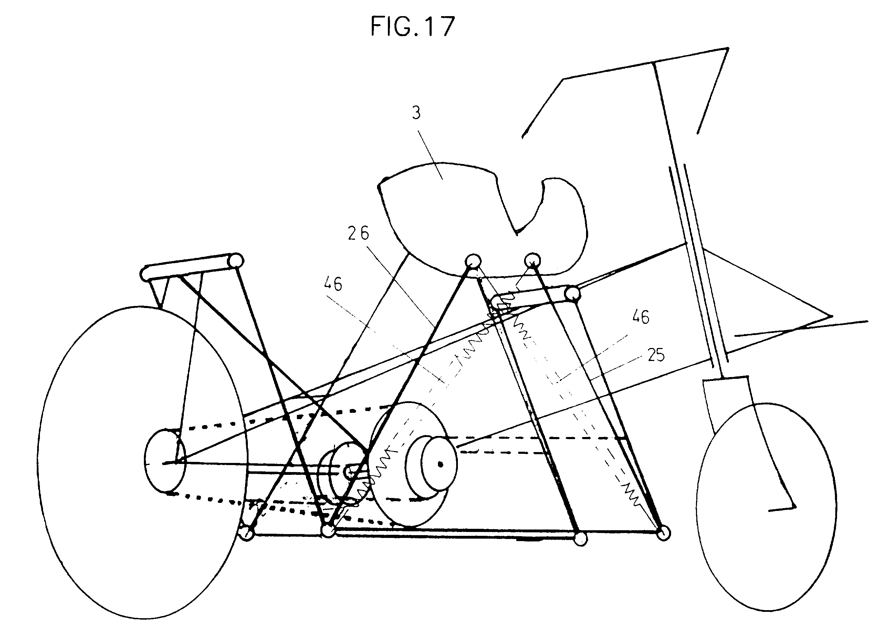

Fig. 17 zeigt eine Variante des Fahrrades 1, bei dem zur Erleichterung der vom Sportler beim Fahren ausgeübten Schaukelbewegung elastische Organe 46, wie Zugfedern, Gummibänder od.dgl., zwischen dem Sitz 3 oder den Armen 25, 26 und den hin- und herbewegbaren Gelenken der Gelenkvierecke vorgesehen sind.

Die Gelenkvierecke können auch mit Biegegelenken aufgebaut sein, wobei anstelle der Schwingen 22, 23 biegeelastische Bänder, z.B. Federstahlbänder, am Rahmen 2 fix angebracht sind. Desgleichen kann die Strebe 24 mit diesen Bändern fix verbunden sein, wobei die Bänder bei Bewegung des Gelenkviereckes S-förmig elastisch verformt werden.

Weiters kann die Erfindung auf Wasserfahrzeuge angewendet werden. Es ist ersichtlich, daß der Rahmen 2 samt dem Antriebssystem in einen Bootskörper eingebaut und das Ritzel 9 auf einer Welle montiert sein kann, an deren Ende je ein Schaufelrad sitzt. Alternativ kann die Welle des Ritzels 9 über ein Kegelradgetriebe mit einer längsverlaufenden Propellerwelle verbunden sein. Günstiger ist allerdings, wenn der Sitz 3 zwischen den Schwingen 22, 23 angeordnet und an diesen oder - gegebenenfalls mit Hilfe einer Brücke - an den Streben 24 befestigt ist, weil dann die Konstruktion erheblich niedriger ist. Selbstverständlich läßt sich dieser Aufbau auch bei anderen Varianten der Erfindung anwenden. In einem relativ langen Wasserfahrzeug können auch mehrere Sitze hintereinander vorgesehen sein. Desgleichen können wie bei dem drei- oder vierrädrigen Fahrrad zwei Sitze nebeneinander angeordnet sein.

Die oben erläuterten Konstruktionen können auch auf Luftfahrzeuge angewendet werden.

Schließlich kann die Erfindung als Standgerät zur Körperertüchtigung bzw. als sogenanntes Zimmerfahrrad ausgebildet sein, wobei der Rahmen samt Antriebssystem auf wenigstens drei Beine gestellt ist und statt des Hinterrades, wie bei solchen Sportgeräten üblich, eine einstellbare Bremsvorrichtung vorgesehen ist.

## Patentansprüche

1. Muskelkraftbetriebenes Sportgerät (1), insbesondere Fahrzeug, mit einem Basiskörper (2), an dem ein in dessen Längsrichtung hin und her bewegbar gelagerter Sitz (3), Handgriffe, Fußstützen (28) und ein Zugmittelgetriebe mit wenigstens einem mittelbar oder unmittelbar mit dem Sitz (3) verbundenen Zugmittel (15; 15a, 15b) angebracht sind, welches Zugmittelgetriebe eine Abtriebswelle (13) aufweist, die über zwei Freiläufe an je ein Antriebsrad (14a, 14b) angeschlossen ist, wobei das Zugmittelgetriebe derart mit den beiden Antriebsrädern (14a, 14b) verbunden ist, daß bei einer Bewegung des Sitzes (3) jeweils ein Freilauf eingekuppelt und der andere Freilauf ausgekuppelt ist, dadurch gekennzeichnet, daß der Sitz (3) in an sich bekannter Weise über wenigstens ein Gelenkviereck (22, 23, 24) mit dem Basiskörper (2) verbunden ist, daR dieses Gelenkviereck (22, 23, 24) am Basiskörper (2) hängend montiert ist, daß die beiden Antriebsräder (14a, 14b) auf einer einzigen, gemeinsamen Abtriebswelle (13) sitzen, daß jedes mit dem Sitz (3) verbundene Zugmittel (15; 15a, 15b) über die Antriebsräder (14a, 14b) geführt ist und daß die Freiläufe gleichsinnig wirkend angeordnet sind.

2. Gerät nach Anspruch 1, dadurch gekennzeichnet, daß zwei gegebenenfalls über Umlenkrollen (16, 17) geführte Zugmittel (15a, 15b) vorgesehen sind, von denen jedes mit einem Ende am Sitz (3) oder am Gelenkviereck (22, 23, 24), mit dem anderen Ende an einem der beiden Antriebsräder (14a, 14b) befestigt ist, die ihrerseits jeweils mit einem Federkraftspeicher verbunden sind.

3. Gerät nach Anspruch 1 oder 2, dadurch gekennzeichnet, daß die beiden Antriebsräder (14a, 14b) unterschiedliche Durchmesser aufweisen.

4. Gerät nach Anspruch 2 und 3, dadurch gekennzeichnet, daß das am größeren Antriebsrad (14a) befestigte Zugmittel (15a) von dessen Unterseite zur hinteren Schwinge (23), das am kleineren Antriebsrad (14b) befestigte Zugmittel (15b) von dessen Oberseite zur vorderen Schwinge (22) des Gelenkviereckes (22, 23, 24) geführt ist.

5. Gerät nach einem der Ansprüche 1 bis 4, dadurch gekennzeichnet, daß jedes Zugmittel (15; 15a, 15b) in an sich bekannter Weise abschnittweise aus einer Kette oder einem Zahnriemen und abschnittweise aus einem Stahlseil besteht und daß die Antriebsräder (14a, 14b) in an sich bekannter Weise Ketten- bzw. Zahnräder sind.

6. Gerät nach einem der Ansprüche 1 bis 5, dadurch gekennzeichnet, daß der Sitz (3) um eine quer zur Längsrichtung verlaufende horizontale Achse (27) schwenkbar gelagert und seine Schwenkbewegung vorzugsweise durch Anschläge begrenzt ist.

7. Gerät nach einem der Ansprüche 1 bis 6, dadurch gekennzeichnet, daß wenigstens ein Gelenk (20, 21, 29a, 29b) jedes Gelenkviereckes (22, 23, 24) verstellbar ausgebildet ist.

8. Gerät nach einem der Ansprüche 1 bis 7, dadurch gekennzeichnet, daß der Sitz (3) an einer Brücke (33) angebracht ist, die an dem bzw. den Gelenkvierecken (22, 23, 24) montiert ist.

9. Gerät nach einem der Ansprüche 1 bis 8, dadurch gekennzeichnet, daß das bzw. die Zugmittel (15; 15a, 15b) an den Schwingen (22, 23) jedes Gelenkvierecks (22, 23, 24) in unterschiedlichen Abständen von deren rahmenfesten Gelenken (20, 21) angeschlossen ist bzw. sind.

10. Gerät nach einem der Ansprüche 1 bis 9, dadurch gekennzeichnet, daß ein weiterer Sitz (3) vorgesehen ist, der in derselben Weise wie der erste Sitz (3) gelagert ist und über Zugmittel (15; 15a, 15b) mit der Abtriebswelle (13) in Verbindung steht, wobei dem zweiten Sitz (3) Fußstützen (28) und Handgriffe zugeordnet sind, die in Längsrichtung des Gerätes den ersten Fußstützen (28) und Handgriffen gegenüberliegen.

## Claims

1. Muscle-powered sports apparatus (1), in particular a vehicle, with a base body (2) fitted to which is a seat (3) capable of moving back and forth in its longitudinal direction, handlebars, foot rests (28) and a traction mechanism with at least one traction means (15; 15a, 15b) connected indirectly or directly to said seat (3), which traction mechanism featuring a power take-off shaft (13) connected via two free-wheeling hubs to one drive wheel (14a, 14b) in each case, said traction mechanism being connection to the two drive wheels (14a, 14b) such that, in the event of a movement of the seat (3) one free-wheeling hub in each case is engaged and the other free-wheeling hub is disengaged, characterised in that the seat (3) is connected by a known method via at least one four-point linkage (22, 23, 24) to the base body (2), that this four-point linkage (22, 23, 24) is suspended from the base body (2), that the two drive wheels (14a, 14b) are located on a single, common power take-off shaft (13), that each traction means (15; 15a, 15b) connected to the seat (3) is runs around the drive wheels (14a, 14b) and that the free-wheeling hubs are arranged so that they act in the same direction.

2. Apparatus according to Claim 1, characterised in that two traction means (15a, 15b), possibly guided via deflection pulleys (16, 17) are provided, of which each is secured at one end to the seat (3) or to the four-point linkage (22, 23, 24), with the other end being secured to one of the two drive wheels (14a, 14b), which in turn are connected in each case to a spring power accumulator.

3. Apparatus according to Claim 1 or 2, characterised in that the two drive wheels (14a, 14b) exhibit different diameters.

4. Apparatus according to Claims 2 and 3, characterised in that traction means (15a) secured to the larger drive wheel (14a) runs from its lower end to rear rocker (23), and that traction means (15b) secured to the smaller drive wheel (14b) runs from its top end to front rocker (22) of the four-point linkage (22, 23, 24).

5. Apparatus according to one of Claims 1 to 4, characterised in that each traction means (15; 15a, 15b) consists in a known manner of a chain or a toothed belt section or sections and a steel rope section or sections, and that the drive wheels (14a, 14b) are chain sprockets or gears of a known type.

6. Apparatus according to one of Claims 1 to 5, characterised in that the seat (3) is pivot-mounted on a horizontal shaft (27) running transverse to the longitudinal direction, and that its swivel motion is preferably limited by mechanical stops.

7. Apparatus according to one of Claims 1 to 6, characterised in that at least one joint (20, 21, 29a, 29b) of each four-point linkage (22, 23, 24) is of an adjustable design.

8. Apparatus according to one of Claims 1 to 7, characterised in that the seat (3) is mounted on a bridge (33) which in turn is fitted to the four-point linkage (22, 23, 24).

9. Apparatus according to one of Claims 1 to 8, characterised in that the traction means (15; 15a, 15b) are connected to the rockers (22, 23) of each four-point linkage (22, 23, 24) at varying distances from their fixed-frame joints (20, 21).

10. Apparatus according to one of Claims 1 to 9, characterised in that a further seat (3) is provided which is mounted in the same way as the first seat (3) and is connected via traction means (15; 15a, 15b) to the take-off shaft (13), the second seat (3) having allocated to it foot rests (28) and handlebars which are located opposite in the longitudinal direction of the apparatus to the first set of foot rests (28) and handlebars.

## Revendications

1. Engin de sport (1) actionné par la force musculaire, notamment véhicule comportant un corps de base (2) sur lequel sont montés un siège (3) logé de manière à être mobile en va-et-vient dans sa direction longitudinale, des poignées, des appui-pieds (28) et un mécanisme de traction comportant au moins a moyen de traction (15; 15a, 15b) raccordé directement ou indirectement au siège, ledit mécanisme de traction présentant un arbre de sortie (13) qui est raccordé par deux roues libres à une roue de commande (14a, 14b) respective, le mécanisme de traction étant raccordé à chacune des roues de commande (14a, 14b) de manière à ce que lors d'un mouvement du siège (3) une des roues libres est embrayée et l'autre des roues libres débrayée, caractérisé en ce que le siège (3) est raccordé d'une manière en soi connue par l'intermédiaire d'un quadrilatère articulé (22, 23, 24) au corps de base (2), que ce quadrilatère articulé (22, 23, 24) est monté de manière suspendue au corps de base (2), que les deux roues de commande (14a, 14b) sont logées sur a seul arbre de sortie (13) commun, que chaque moyen de traction (15; 15a, 15b) raccordé au siège (3) est guidé par l'intermédiaire des roues de commandes (14a, 14b) et que les roues libres sont disposées de manière à agir dans le même sens.

2. Engin selon la revendications 1, caractérisé en ce que deux moyens de traction (15a, 15b) guidés le cas échéant au moyen de poulies de renvoi (16, 17) sont prévus, dont chacun est fixé par une de ses extrémités au siège (3) ou au quadrilatère articulé (22, 23, 24) et par son autre extrémité à l'une des roues de commande (14a, 14b) qui à leur tour sont raccordées chacune à un accumulateur de force de ressort.

3. Engin selon les revendications 1 ou 2, caractérisé en ce que les deux roues de commande (14a, 14b) présentent des diamètres différents.

4. Engin selon les revendications 2 et 3, caractérisé en ce que le moyen de traction (15a) fixé à la roue de commande plus grande (14a) est guidé à partir du côté inférieur de celle-ci vers le bras oscillant arrière (23), le moyen de traction (15b) fixé à la roue de commande (14b) plus petite a partir du côté supérieur de celle-ci vers le bras oscillant avant (22) du quadrilatère articulé (22, 23, 24).

5. Engin selon l'une quelconque des revendications 1 à 4, caractérisé en ce que chaque moyen de traction (15; 15a, 15b) consiste en une manière en soi connue par section en une chaîne ou une courroie crantée et par section en un câble d'acier, et que les roues de commande (14a, 14b) sont des roues à chaîne ou des roues dentées en soi connues.

6. Engin selon l'une quelconque des revendications 1 à 5, caractérisé en ce que le siège (3) est logé de manière à pouvoir basculer autour d'un axe horizontal (27) s'étendant transversalement par rapport au sens longitudinal et que son mouvement de bascule est limité de préférence par des butées.

7. Engin selon l'une quelconque des revendications 1 à 6, caractérisé en ce qu'au moins une articulation (20, 21, 29a, 29b) de chaque quadrilatère articulé (22, 23, 24) est formée de manière à pouvoir être réglée.

8. Engin selon l'une quelconque des revendications 1 à 7, caractérisé en ce que le siège (3) est monté sur un pont (33) qui est monté sur Je ou les quadrilatère(s) articulé(s) (22, 23, 24).

9. Engin selon l'une quelconque des revendications 1 à 8, caractérisé en ce que le ou les moyen(s) de traction (15; 15a, 15b) est ou sont raccordé(s) aux bras oscillants (22, 23) de chaque quadrilatère articulé (22, 23, 24) à distances diverses des articulations solidaires du cadre (20, 21) de ceux-ci.

10. Engin selon l'une quelconque des revendications 1 à 9, caractérisé en ce qu'un siège supplémentaire (3) est prévu, qui est logé de la même manière que le premier siège (3) et qui est relié par l'intermédiaire de moyens de traction (15; 15a, 15b) à l'arbre de sortie (13), des appui-pieds (28) et des poignées étant associées au second siège, qui en direction longitudinale de l'engin se trouvent en face des premiers appui-pieds (28) et poignées.
